# EUROPÄISCHE PATENTSCHRIFT

(11) **EP 2 748 232 B1**
(45) Veröffentlichungstag und Bekanntmachung des Hinweises auf die Patenterteilung: **14.10.2015**
(21) Anmeldenummer: 12746098.8
(22) Anmeldetag: 14.08.2012
(51) Int. Cl.: C08G 18/63, C08G 77/46, C08G 77/442, C08L 83/12, C08G 18/50, C08G 18/48, C08L 71/00, C08F 285/00, C08G 101/00, C08F 290/06, C08G 18/40, C08L 71/02

(54) **PARTIKEL ENTHALTENDE POLYETHERALKOHOLE**
POLYETHER ALCOHOLS CONTAINING PARTICLES
POLYÉTHERALCOOLS CONTENANT DES PARTICULES

(30) Priorität: 23.08.2011 EP 11178508
(43) Veröffentlichungstag der Anmeldung: 02.07.2014
(73) Patentinhaber: BASF SE, 67056 Ludwigshafen (DE)
(72) Erfinder: EMGE, Andreas, Shanghai 200127 (CN); FREIDANK, Daniel, 200122 Shanghai (CN); PETROVIC, Dejan, 49080 Osnabrück (DE); REINOSO GARCIA, Marta, 69221 Dossenheim (DE); WINNIG, Stefan, 67305 Ramsen (DE); SCHÜTTE, Markus, 49080 Osnabrück (DE)
(86) Internationale Anmeldenummer: PCT/EP2012/065859
(87) Internationale Veröffentlichungsnummer: WO 2013/026738

(56) Entgegenhaltungen:
- WO-A2-2007/101048
- US-A- 4 723 026
- US-A- 5 523 375

## Beschreibung

Gegenstand der Erfindung sind Partikel enthaltende Polyetheralkohole, ihre Herstellung und ihre Verwendung, insbesondere bei der Herstellung von Polyurethanen, vorzugsweise von Polyurethan-Hartschaumstoffen.

Partikel enthaltende Polyole sind seit langem bekannt und werden vielfach zur Herstellung von Polyurethanen eingesetzt. Eine häufig eingesetzte Variante von Partikel enthaltenden Polyolen sind die sogenannten Graft-Polyole. Diese werden zumeist durch in-situ Polymerisation von olefinisch ungesättigten Monomeren in Polyolen, sogenannten Carrier-Polyolen, hergestellt. Die Polymerisation erfolgt üblicherweise in Anwesenheit von Verbindungen, die für eine stabile Dispersion der Partikel in den Polyolen sorgen, und häufig als Makromere bezeichnet werden.

Wie bereits ausgeführt, werden die Graft-Polyole bei der Herstellung von Polyurethanen eingesetzt. Ein wesentliches Gebiet ist hierbei die Herstellung von Polyurethan-Hartschaumstoffen.

Diese sind seit langem bekannt und vielfach in der Literatur beschrieben. Ihre Herstellung erfolgt üblicherweise durch Umsetzung von Polyisocyanaten mit Verbindungen mit mindestens zwei mit Isocyanatgruppen reaktiven Wasserstoffatomen, insbesondere mehrfunktionellen Alkoholen. Die Polyurethan-Hartschaumstoffe werden vorzugsweise zur Dämmung in Kältegeräten oder für Bauelemente eingesetzt.

Es ist eine ständige Aufgabe, die Eigenschaften der Polyurethan-Hartschaumstoffe zu verbessern. Insbesondere sollten die Wärmeleitfähigkeit und die Entformzeit verkürzt sowie die Verarbeitbarkeit der Aufbaukomponenten für die Polyurethan-Hartschaumstoffe, insbesondere die Verträglichkeit mit den Treibmitteln, ständig gewährleistet werden.

Es hat sich gezeigt, dass durch den Einsatz von Polyetheralkoholen, die durch in-situ Polymerisation von olefinisch ungesättigten Monomeren, insbesondere Styrol und Acrylnitril, hergestellte Polymerpartikel enthalten, die Entformbarkeit der Polyurethan-Hartschaumstoffe verbessert werden kann. Derartige Polyole werden in der Technik häufig auch als Graft-Polyole bezeichnet.

So beschreibt WO 2004/035650 ein Verfahren zur Herstellung von Polyurethan-Hartschaumstoffen unter Verwendung von Graft-Polyolen. Die dort beschriebenen Graft-Polyole werden unter Verwendung von 2 bis 8-funktionellen Polyetheralkoholen und Styrol und Acrylnitril, bevorzugt in einem Gewichtsverhältnis von 2:1; hergestellt und im Gemisch mit anderen Polyolen, beispielsweise auf Basis von Zucker und von aromatischen Aminen, wie Toluylendiamin, zur Herstellung der Polyurethan-Hartschaumstoffe eingesetzt. Die dort beschriebenen Hartschaumstoffe zeichnen sich durch eine gute Aushärtung und Entformbarkeit und gutes Fließverhalten aus. Nachteilig sind jedoch die unzureichende Mischbarkeit der Graft-Polyole mit Polyolen und den Treibmitteln sowie die geringe Lagerstabilität der Polyolkomponente, insbesondere bei Verwendung von Kohlenwasserstoffen.

In WO 2005/097863 wird ein Verfahren zur Herstellung von Polyurethan-Hartschaumstoffen unter Verwendung von Graft-Polyolen beschreiben, die unter Verwendung von Polyetheralkoholen mit einem hohen Anteil von Ethylenoxid in der Kette hergestellt wurden. Dadurch sollte die Verträglichkeit mit den Polyolen der Formulierung verbessert werden.

In EP 1108514 wird ein Verfahren zur Herstellung von Hartschaumpaneelen beschrieben, bei dem ein Graft-Polyol verwendet wird. Dieser wird unter Verwendung einer Polyolmischung hergestellt, die einen Polyetheralkohol mit einem Gehalt an Ethylenoxid von mindestens 40 Gew.-% aufweist. Diese Schaumstoffe sollten einen verringerten Schrumpf aufweisen.

In US 4723026 wird ein Verfahren zur Herstellung von siliziumhaltigen Partikel enthaldenden Polyetheralkoholen beschrieben.

JP 2000 169541 beschreibt Polyurethan-Hartschaumstoffe mit einer verbesserten mechanischen Festigkeit und einem geringen Schrumpf. Zu deren Herstellung wurde ein ausschließlich unter Verwendung von Acrylnitril als Monomer hergestellter Graft-Polyol eingesetzt.

Auch in JP 11060651 wird ein Verfahren zur Herstellung von Polyurethan-Hartschaumstoffen unter Verwendung von Graft-Polyolen beschrieben, zu deren Herstellung ein Polyetheralkohol mit einem Gehalt von mindestens 40 Gew.-% Ethylenoxid eingesetzt wird.

Die Verwendung so hoher Mengen an Ethylenoxid in den Graft-Polyolen hat jedoch auch Nachteile. So ist die Löslichkeit der üblicherweise als Treibmittel verwendeten Kohlenwasserstoffe in derartigen Polyolen schlechter. Weiterhin weisen derartige Polyole eine erhöhte Eigenreaktivität auf. Dies verringert die Möglichkeiten, mittels Katalysatoren die Polyurethanbildung zu steuern. Insbesondere bei der Verwendung von Polyolen, die mittels Sucrose gestartet werden, kommt es zu großen Mischbarkeitsproblemen mit den Graft-Polyolen.

Es war die Aufgabe der vorliegenden Erfindung, Polyurethane, insbesondere Polyurethan-Hartschaumstoffe, bereitzustellen, die sich durch eine hohe Verträglichkeit der Polyolkomponente auszeichnen, und bei der die Polyolkomponente eine geringe Viskosität aufweist. Die resultierenden Hartschaumstoffe sollten sich durch eine kurze Entformzeit, eine geringe Wärmeleitfähigkeit und gute mechanische Eigenschaften auszeichnen.

Die Aufgabe konnte überraschenderweise gelöst werden durch einen speziellen, Partikel enthaltenden Polyetheralkohol, im Folgenden auch als Graft-Polyol bezeichnet, und seine Verwendung zur Herstellung von Polyurethanen, insbesondere von Polyurethan-Hartschaumstoffen.

Gegenstand der Erfindung sind demzufolge Partikel enthaltende Polyetheralkohole, herstellbar durch in-situ Polymerisation von olefinisch ungesättigten Monomeren in einem Polyetheralkohol, dadurch gekennzeichnet, dass die Polymerisation in Anwesenheit von mindestens einer Verbindung (A) durchgeführt wird, die eine Polysiloxankette enthält, an der mindestens eine Polyetherkette, die mindestens ein reaktives Wasserstoffatom enthält, und eine Polyetherkette, die mindestens eine olefinische Doppelbindung enthält, gebunden sind.

Gegenstand der Erfindung ist weiterhin ein Verfahren zur Herstellung der Partikel enthaltenden Polyetheralkohole durch in-situ Polymerisation von olefinisch ungesättigten Monomeren in einem Polyetheralkohol, dadurch gekennzeichnet, dass die Polymerisation in Anwesenheit von mindestens einer Verbindung (A) durchgeführt wird, die eine Polysiloxankette enthält, an der mindestens eine Polyetherkette, die mindestens ein reaktives Wasserstoffatom enthält, und eine Polyetherkette, die mindestens eine olefinische Doppelbindung enthält, gebunden sind.

Gegenstand der Erfindung ist weiterhin die Verwendung der erfindungsgemäßen Graft-Polyole zur Herstellung von Polyurethanen, insbesondere von Polyurethan-Hartschaumstoffen.

Gegenstand der Erfindung ist weiterhin ein Verfahren zur Herstellung von Polyurethanen, insbesondere von Polyurethan-Hartschaumstoffen, durch Umsetzung von
a) Polyisocyanaten mit
b) Verbindungen mit mindestens zwei mit Isocyanatgruppen reaktiven Wasserstoffatomen,
   dadurch gekennzeichnet, dass die Komponente b) mindestens einen erfindungsgemäßen Partikel enthaltenden Polyetheralkohol b1) enthält.

Vorzugsweise haben die Verbindungen (A) die allgemeine Formel (I), 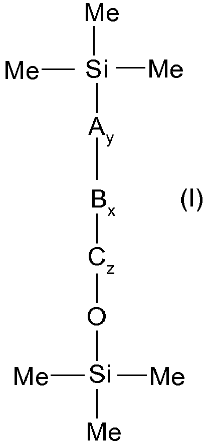 worin 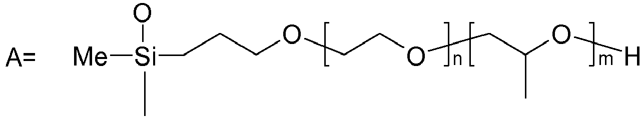 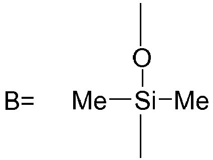 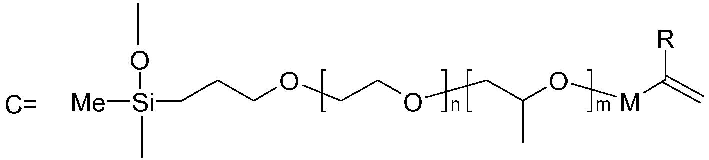 wobei A, B und C statistisch angeordnet sind und x, y und z so gewählt sind, dass das Gewichtsverhältnis der Polysiloxankette zum Gesamtmolekulargewicht 0,1 bis 0,4 beträgt,
- Me: eine Methylgruppe,
- R: eine Alkylgruppe mit 1 bis 10 Kohlenstoffatomen,
- M: eine Alkylen- oder Arylengruppe oder araliphatische Gruppe mit 2 bis 10 Kohlenstoffatomen, die über eine Ether-, Ester-, Urethan-, Carbonat- oder Acetalbindung an die Polyetherkette angebunden sein kann,
- m, n: ganze Zahlen, die so gewählt sind, dass die Molekulargewichte Mₙ der Einheiten A und C im Bereich zwischen 500 und 2000 liegen und das Verhältnis n : m im Bereich von 25 : 75 bis 75 : 25 liegt,
bedeuten,
wobei die Polysiloxankette 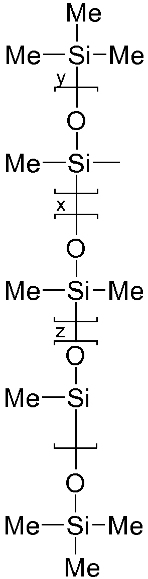 ein Molekulargewicht Mn zwischen 2000 und 4500 aufweist.

In einer bevorzugten Ausführungsform der Erfindung weisen die Verbindungen (A) die allgemeine Formel (II) 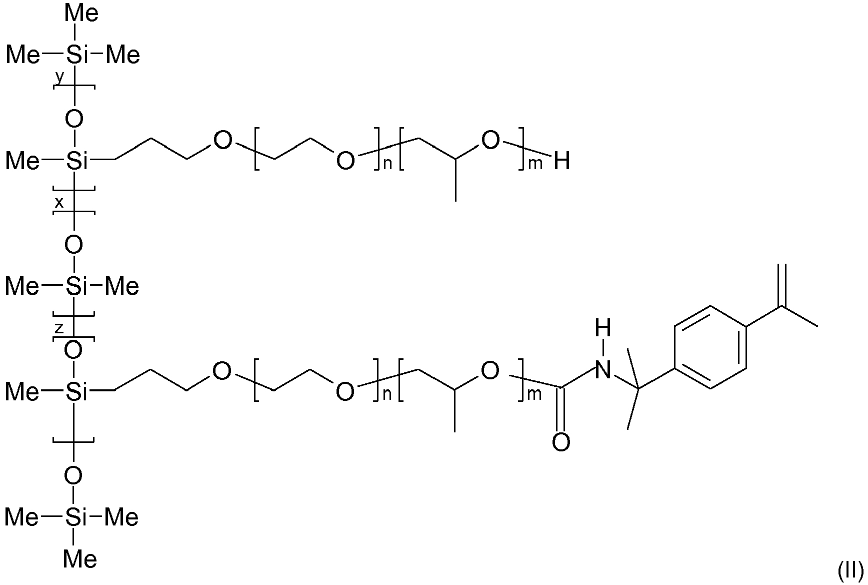 auf, wobei die Variablen Me und m, n, x, y und z die gleiche Bedeutung haben wie in Formel (I).

Das Molekulargewicht Mn der Verbindungen (A) ist im Allgemeinen kleiner als 30000 und beträgt bevorzugt 8000 bis 30000 g/mol, besonders bevorzugt 10000 bis 30000 g/mol.

In einer weiteren bevorzugten Ausführungsform der Erfindung weist die Verbindung (A) 8 bis 25 Einheiten A und/oder C im Molekül auf.

In einer weiteren bevorzugten Ausführungsform liegen zwischen je zwei Einheiten A und/oder C im Mittel 2 bis 8 Einheiten B.

In der Verbindung (A) ist das Verhältnis h des Molekulargewichts der Polysiloxankette zum Gesamtmolekulargewicht der Verbindung (A) 0,1 bis 0,4.

In einer weiteren bevorzugten Ausführungsform beträgt in der Verbindung (A) die durchschnittliche Anzahl der Gruppen C 0,7 bis 1, beispielsweise 0,85-0,95.

Die Herstellung von Verbindungen (A) kann beispielsweise wie folgt durchgeführt werden: In einem ersten Schritt wird das Polysiloxan-Rückgrat durch Gleichgewichtsreaktion von Hexamethyldisiloxan (HMDS), Oktamethyldisiloxan (OMTS) und Polymethylhydrosiloxan (PMHS) in Gegenwart von Triflourmethansulfonsäure hergestellt. Dabei erfolgt eine Ringöffnung von OMTS und eine Depolymerisation von PMHS. HMDS reagiert mit den gebildeten Oligomeren und erzeugt dabei die Endgruppen. In einem zweiten Schritt wird Allylalkohol mit Ethylenoxid und/oder Propylenoxid alkoxiliert und dabei ein Allylpolyetherol erzeugt. In einem dritten Schritt erfolgt eine Platin-katalysierte Hydrosilylierung der Allylgruppe des Allylpolyetherols unter Bildung eines Polyethersiloxans. Dabei werden durch Insertion von Doppelbindungen der Allylgruppen des Allylpolyetherols in Si-H-Bindungen des Polysiloxans Si-C-Bindungen ausgebildet. Beispielsweise werden 1,5 Äquivalente Allylpolyetherol verwendet. In einem vierten Schritt wird das Polyethersiloxan beispielsweise mit Dimethyl-metaisopropylbenzylisocyanat (TMI) oder einer ähnlichen Verbindung umgesetzt. Dabei werden unter Ausbildung von Urethangruppen Reste mit polymerisierbaren Doppelbindungen, beispielsweise Dimethyl-metaisopropenylbenzylreste in das Polymer eingefügt. Dieser Syntheseschritt kann bei 80° C erfolgen. Dabei wird vorzugsweise ein Unterschuss an TMI verwendet, so dass im Durchschnitt weniger als eine OH-Gruppe des Polyethersiloxans pro Molekül mit TMI reagiert. Durch Wahl der stöchiometrischen Verhältnisse können die Variablen x, y, z, n und m gezielt eingestellt werden.

Die erfindungsgemäßen Graft-Polyole b1) werden üblicherweise durch in-situ Polymerisation von olefinisch ungesättigten Monomeren in Polyetheralkoholen, im Folgenden auch als Carrier-Polyole bezeichnet, in Anwesenheit mindestens einer Verbindung (A)hergestellt. Die Verbindung (A) wird im Folgenden auch als Makromer bezeichnet.

Die erfindungsgemäßen Graft-Polyle b1) weisen im Allgemeinen eine Hydroxylzahl im Bereich von 40 bis 260 mg KOH/g , vorzugsweise von 40 bis 150 mg KOH/g auf.

Als Carrier-Polyole werden vorzugsweise solche mit einer Funktionalität von 2 bis 4, insbesondere von 3 bis 4, eingesetzt. Sie werden üblicherweise hergestellt durch Anlagerung von Alkylenoxiden, insbesondere Propylenoxid oder Gemischen aus Propylenoxid und Ethylenoxid mit maximal 20 Gew.-%, bezogen auf das Gewicht des Polyetheralkohols, Ethylenoxid an H-funktionelle Startsubstanzen. Die Startsubstanzen sind zumeist Alkohole oder Amine mit der entsprechenden Funktionalität. Bevorzugt eingesetzte Startsubstanzen sind Ethylenglykol, Propylenglykol, Glyzerin, Trimethylolpropan, Ethylendiamin und Toluylendiamin (TDA). In einer besonders bevorzugten Ausführungsform der Erfindung wird als Startsubstanz TDA eingesetzt, wobei die ortho-Isomere des TDA bevorzugt sind.

Die Carrier-Polyole haben vorzugsweise eine Hydroxylzahl von größer 100 mg KOH/g, besonders bevorzugt im Bereich zwischen 100 und 300 mg KOH/g.

Die Carrier-Polyole werden nach den üblichen und bekannten Verfahren zur Herstellung von Polyetheralkoholen hergestellt, die unten näher beschrieben sind.

Die Carrier-Polyole werden vorzugsweise einzeln eingesetzt, es ist jedoch auch möglich, diese in Form von beliebigen Gemischen untereinander einzusetzen.

Bei der bevorzugten Verwendung von TDA wird als Alkylenoxid vorzugsweise ein Gemisch aus Ethylenoxid und Propylenoxid eingesetzt. dabei wird bevorzugt zunächst Ethylenoxid und danach Propylenoxid angelagert, wobei die Anlagerung des Ethylenoxids vorzugsweise ohne Anwesenheit eines Katalysators erfolgt.

Während der radikalischen Polymerisation werden die Verbindungen (A) mit in die Copolymerkette eingebaut. Dadurch bilden sich Blockcopolymere mit einem Polyether- und einen Polyacrylnitrilstyrol-Block, welche in der Grenzfläche von kontinuierlicher Phase und dispergierter Phase als Phasenvermittler wirken und das Agglomerieren der Graftpolyolpartikel unterdrücken. Der Anteil der Verbindung (A) beträgt üblicherweise 1 bis 20, besonders bevorzugt 1 bis 15 Gew.-%, bezogen auf das Gesamtgewicht der zur Herstellung des Graft Polyols eingesetzten Monomere.

Zur Herstellung von Graft-Polyolen werden üblicherweise Moderatoren, auch als Kettenüberträger bezeichnet, eingesetzt. Der Einsatz und die Funktion dieser Moderatoren wird beispielsweise in US 4 689 354, beschrieben. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Graft-Polyole beeinflusst. Der Anteil der Moderatoren beträgt üblicherweise 0,5 bis 25 Gew.-%, bezogen auf das Gesamtgewicht der zur Herstellung des Graft-Polyols eingesetzten Monomere. Moderatoren, die üblicherweise zur Herstellung von Graft-Polyolen eingesetzt werden, sind Alkohole, wie 1-Butanol, 2-Butanol, Isopropanol, Ethanol, Methanol, Cyclohexan, Toluol, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styren.

Zur Initiierung der radikalischen Polymerisation werden üblicherweise Peroxid- oder AzoVerbindungen, wie Dibenzoyl peroxide, Lauroyl peroxide, t-Amylperoxy-2-ethylhexanoate, Di-t-butyl peroxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und di-t-Butylperphthalate, 2,2'-Azobis(2,4-dimethyl-valereronitrile), 2,2'-Azobisisobutyronitrile (AIBN), Dimethyl-2,2'-azobisisobutyrate, 2,2'-Azobis(2-methylbutyronitrile (AMBN), 1,1'-Azobis(1-cyclohexanecarbonitrile) eingesetzt. Der Anteil der Initiatoren beträgt üblicherweise 0,1 bis 6 Gew.-%, bezogen auf das Gesamtgewicht der zur Herstellung des Graft-Polyols eingesetzten Monomere.

Die radikalische Polymerisation zur Herstellung von Graft-Polyolen wird aufgrund der Reaktionsgeschwindigkeit der Monomere sowie der Halbwertszeit der Initiatoren üblicherweise bei Temperaturen von 70 bis 150 °C und einem Druck bis zu 20 bar durchgeführt. Bevorzugte Reaktionsbedingungen zur Herstellung von Graft-Polyolen sind Temperaturen von 80 bis 140 °C, bei einem Druck von Atmosphärendruck bis 15 bar.

Die Graft-Polyole b1) haben vorzugsweise einen Gehalt an polymerisierten Partikeln, auch als Feststoffgehalt bezeichnet, von mindestens 35 Gew.-%, bezogen auf das Gewicht des Graft-Polyols. Üblicherweise sollte ein Feststoffgehalt von 65 Gew.-% nicht überschritten werden, da ansonsten die Viskosität der Polyole zu stark ansteigt und es damit zu Problemen bei der Verarbeitung kommen kann.

Die Graft-Polyole b1) haben vorzugsweise eine Teilchengröße der Polymere von 0,1 µm bis 8 µm, vorzugsweise 0,2 µm bis 4 µm mit einem Maximum bei der Teilchengröße bei 0,2 bis 3 µm vorzugsweise bei 0,2 bis 2,0 µm.

In einer weiteren bevorzugten Ausführungsform der Graft-Polyole b1) ist die Teilchengrößenverteilung bimodal, das heißt, die Verteilungskurve der Teilchengröße weist zwei Maxima auf. Derartige Graft-Polyole können beispielsweise hergestellt werden, durch Mischen von Graft-Polyolen mit monomodaler Teilchengrößenverteilung und unterschiedlicher Teilchengröße im entsprechenden Verhältnis aber auch indem man als Carrier-Polyol in der Reaktionsvorlage ein Polyol verwendet, das bereits Polymerisate aus olefinisch ungesättigten Monomeren enthält. Die Teilchengröße liegt auch bei dieser Ausführungsform im oben beschriebenen Bereich.

Die Graft-Polyole b1) können in kontinuierlichen Verfahren und diskontinuierlichen Verfahren hergestellt werden. Die Synthese von Graft-Polyolen nach beiden Verfahren ist bekannt und wird in einer Reihe von Beispielen beschrieben. So wird die Synthese von Graft-Polyolen nach den Semi-Batch-Verfahren wird beispielsweise beschrieben in EP 439755. Eine Sonderform des Semi-Batch-Verfahrens ist das Semi-Batch-Saatverfahren, bei dem in der Reaktionsvorlage zusätzlich ein Graft-Polyol als Saat eingesetzt wird, beispielsweise beschrieben in EP 510533. Die Synthese von Graft-Polyolen nach einem kontinuierlichen Verfahren ist ebenfalls bekannt und wird unter anderem in WO 00/59971 beschrieben.

Wie oben beschrieben werden die erfindungsgemäßen Graft-Polyole vorzugsweise zur Herstellung von Polyurethanen, und hier insbesondere von Polyurethan-Hartschaumstoffen, eingesetzt.

Die Herstellung der Polyurethane erfolgt nach üblichen und bekannten Verfahren durch Umsetzung von Polyolen b) mit Isocyanaten a), wobei die Polyole b) mindestens ein erfindungsgemäßes Graft-Polyol, im Folgenden als Polyol b1) bezeichnet, enthalten.

Das Graft-Polyol b1) kann prinzipiell als einzige Verbindung mit mindestens zwei mit Isocyanatgruppen reaktiven Wasserstoffatomen b) eingesetzt werden. Es ist jedoch bevorzugt, diese Verbindung b1) im Gemisch mit anderen Verbindungen mit mindestens zwei mit Isocyanatgruppen reaktiven Wasserstoffatomen einzusetzen.

Dabei wird der Polyetheralkohol b1) vorzugsweise in einer Menge von 10 bis 30 Gew.-%, bezogen auf das Gewicht des Polyetheralkohols, eingesetzt.

Dazu können vorzugsweise die üblichen und bekannten Verbindungen mit mindestens zwei mit Isocyanatgruppen reaktiven Wasserstoffatomen zum Einsatz kommen. Vorzugsweise in Kombination mit den Graft-Polyolen b1) werden Polyetheralkohole und/oder Polyesteralkohole eingesetzt.

Die gemeinsam mit den Graft-Polyolen b1) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den Graft-Polyolen b1) verwendeten Polyetheralkohole haben zumeist eine Funktionalität zwischen 2 und 8, insbesondere 3 bis 8.

Insbesondere kommen Polyetheralkohole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin (TDA), insbesondere 2,3- und 3,4-TDA, und 4,4'-, 2,4'- und 2,2'-Diaminodiphenylmethan sowie aliphatische Di- und Polyamine, wie Ethylendiamin, eingesetzt.

Die Polyetheralkohole besitzen eine Funktionalität von vorzugsweise 3 bis 8 und Hydroxylzahlen von vorzugsweise 100 mg KOH/g bis 1200 mg KOH/g und insbesondere 240 mg KOH/g bis 570 mg KOH/g.

In einer bevorzugten Ausführungsform des erfindungsgemäßen Verfahrens wird als Verbindungen mit mindestens zwei mit Isocyanatgruppen reaktiven Wasserstoffatomen eine Mischung aus dem Graft-Polyol b1) und einem mit Saccharose gestarteten Polyetheralkohol b2) eingesetzt. Besonders bevorzugt wird zusätzlich ein mit einem dreifunktionellen Alkohol oder einem aromatischen Amin gestarteten Polyetheralkohol b3) eingesetzt.

Der Polyetheralkohol b2) hat vorzugsweise eine Hydroxylzahl im Bereich zwischen 375 und 525 mg KOH/g und eine Funktionalität von 5 bis 7,5. Die Saccharose wird zumeist im Gemisch mit Wasser und/oder anderen, bei Raumtemperatur flüssigen zwei- bis dreifunktionellen Alkoholen, wie Ethylenglykol, Propylenglykol und/oder Glyzerin mit den Alkylenoxiden, bevorzugt Propylenoxid und/oder Ethylenoxid, umgesetzt. Die Umsetzung kann mit Alkali- oder Erdalkalihydroxiden oder Aminen katalysiert werden.

Der Polyetheralkohol b3) hat vorzugsweise einen Hydroxylzahl im Bereich zwischen 100 und 250 mg KOH/g und eine Funktionalität von 3 bis 4. Als dreifunktionelle Alkohole werden vorzugsweise Glyzerin oder Trimethylolpropan eingesetzt. Als aromatisches Amin wird vorzugsweise TDA eingesetzt, wobei besonders bevorzugt die 2,3- und 3,4-Isomeren eingesetzt werden.

In dieser Ausführungsform der Erfindung besteht die Komponente b) aus 10 bis 25 Gew.-% der Komponente b1), 25 bis 65 Gew.-% aus einem mit Saccharose gestarteten Polyetheralkohol b2), und 10 - 40 Gew.-% aus einem mit einem aromatischen Amin oder einem mit einem dreiwertigen Alkohol gestartetem Polyetheralkohol b3) besteht.

Zu den übrigen für das erfindungsgemäße Verfahren eingesetzten Einsatzstoffen ist im Einzelnen folgendes zu sagen:
Als organische Polyisocyanate a) kommen vorzugsweise aromatische mehrwertige Isocyanate in Betracht.

Im einzelnen seien beispielhaft genannt: 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethandiisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa.s.

Weitere, an Stelle von oder in Kombination mit den Polyolen b2) und b3) einsetzbare Polyole wurden bereits oben beschrieben.

Zu den Verbindungen mit mindestens zwei gegenüber Isocyanat reaktiven Wasserstoffatomen b) gehören auch die gegebenenfalls mitverwendeten Kettenverlängerer und Vernetzer. Die Polyurethan-Schaumstoffe können ohne oder unter Mitverwendung von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Verbindungen mit mindestens zwei mit Isocyanatgruppen reaktiven Wasserstoffatomen b), eingesetzt.

Die Umsetzung wird üblicherweise in Anwesenheit von Katalysatoren, Treibmitteln sowie üblichen Hilfs- und/oder Zusatzstoffen durchgeführt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind stark basische Amine, wie z. B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Treibmittel kann vorzugsweise Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane wie C₃F₈, C₄F₁₀, C₅F₁₂, C₆F₁₄, und C₇F₁₇. Die genannten physikalischen Treibmittel können allein oder in beliebigen Kombinationen untereinander eingesetzt werden.

Besonders bevorzugt enthält das Treibmittel mindestens einen aliphatischen oder cycloaliphatischen Kohlenwasserstoff, der vorzugsweise mindestens 4 Kohlenstoffatome enthält. Dieser wird in einer bevorzugten Ausführungsform des erfindungsgemäßen Verfahrens wird eine Kombination aus Wasser und einem aliphatischen Kohlenwasserstoff als Treibmittel eingesetzt. Bevorzugte Kohlenwasserstoffe sind n-Pentan, Isopentan und Cyclopentan.

Das erfindungsgemäße Verfahren kann, falls erforderlich, in Anwesenheit von Flammschutzmitteln sowie üblichen Hilfs- und/oder Zusatzstoffen Hilfs- und/oder Zusatzstoffen durchgeführt werden.

Als Flammenschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphosphonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind zumeist Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Verbindungen mit mindestens zwei mit Isocyanatgruppen reaktiven Wasserstoffatomen b) in solchen Mengen zur Umsetzung gebracht, dass der Isocyanatindex in einem Bereich zwischen 100 und 220, vorzugsweise zwischen 115 und 195, liegt. Die Polyurethan-Hartschaumstoffe können diskontinuierlich oder kontinuierlich mit Hilfe bekannter Mischvorrichtungen hergestellt werden.
Bei der Herstellung von Polyisocyanuratschäumen kann auch mit einem höheren Index, vorzugsweise bis 350, gearbeitet werden.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen b), mit den Flammschutzmitteln, den Katalysatoren c), den Treibmitteln d), sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen in geschlossene Stützwerkzeuge gegossen werden. Nach dieser Technologie werden z. B. diskontinuierlich Sandwichelemente gefertigt.

Daneben kann das Reaktionsgemisch auch frei auf Flächen oder in offene Hohlräume gegossen oder gespritzt werden. Nach diesem Verfahren lassen sich Dächer bzw. komplizierte Behälter vor Ort isolieren. Das Reaktionsgemisch kann auch an einer Stelle oder an mehreren Stellen gleichzeitig in ein geschlossenes Formwerkzeug auch komplexer Geometrie eingebracht werden. Die Position der Injektion des Reaktionsgemischs kann sich an verschiedenen Stellen der Form befinden. Die Form kann zum Zeitpunkt der Injektion des Reaktionsgemischs unterschiedlich ausgerichtet sein bezüglich der Raumrichtungen. Solche Verfahren sind typisch beispielsweise für die Herstellung von Kältegeräten. Ebenfalls kann das Reaktionsgemisch in ein offenes Formwerkzeug gegossen werden, welches nach Abschluss des Füllvorgangs geschlossen wird. Diese Prozedur ist beispielsweise typisch für die Herstellung von Türen für Kältegeräte.

Auch die kontinuierliche Vermischung der Isocyanatkomponente mit der Polyolkomponente zur Herstellung von Sandwich- oder Dämmelementen auf Doppelbandanlagen ist eine bevorzugte Ausführungsform des erfindungsgemäßen Verfahrens. Bei dieser Technologie ist es üblich, die Katalysatoren und die Treibmittel über weitere Dosierpumpen in die Polkomponente zu dosieren. Dabei können die eingesetzten Komponenten in bis zu 8 Einzelkomponenten aufgeteilt werden. Die Verschäumrezepturen lassen sich, abgeleitet von dem Zwei-Komponenten-Verfahren in einfacher Weise auf die Verarbeitung von Mehrkomponentensystemen umrechnen.

Die nach dem erfindungsgemäßen Verfahren hergestellten Polyurethan-Hartschaumstoffe sind mit einer sehr kurzen Entformzeit auf Basis einer phasenstabilen Polyolkomponente herstellbar, was signifikant verkürzte Taktzeiten ermöglicht. In der Polyolkomponente sind trotz Anwesenheit der Graft-Polyols große Mengen an physikalischen Treibmitteln löslich, so dass Schaumstoffdichten im Bauteil von unter 30 g/l erreicht werden können. Die Schaumstoffeigenschaften in Bezug auf Druckfestigkeit, Wärmeleitfähigkeit und Qualität der Schaumstoffoberflächen/Bildung von Lunkern sind exzellent.

Die Erfindung soll an den folgenden Beispielen näher beschrieben werden.

### Beispiele

### a) Herstellung der Graft-Polyole

Zur Herstellung der Graft-Polyole werden das Carrier Polyol, der Initiator, der Moderator und 10 Gew.-% der Menge an Makromer in einem mit einem Rührer versehenen Reaktor vorgelegt und das Gemisch auf 100°C erwärmt. Anschließend werden die Monomere und 90% des Makromers kontinuierlich zudosiert. Nach 165 Minuten Reaktion bei 115°C werden die unreagierten Monomere für 2 Stunden bei 10 mbar und 125°C abdestilliert.

### Moderator: 1% Dodecanthiol (bezogen auf die Monomermenge)

Initiator: 0.45% Wako^{®} V601 (Dimethyl 2,2'-azobis(2-methylpropionate) (bezogen auf die Monomermenge)

Die übrigen Ausgangsstoffe und die Kennwerte der Graft-Polyole sind in den Tabellen 1 und 2 angegeben.

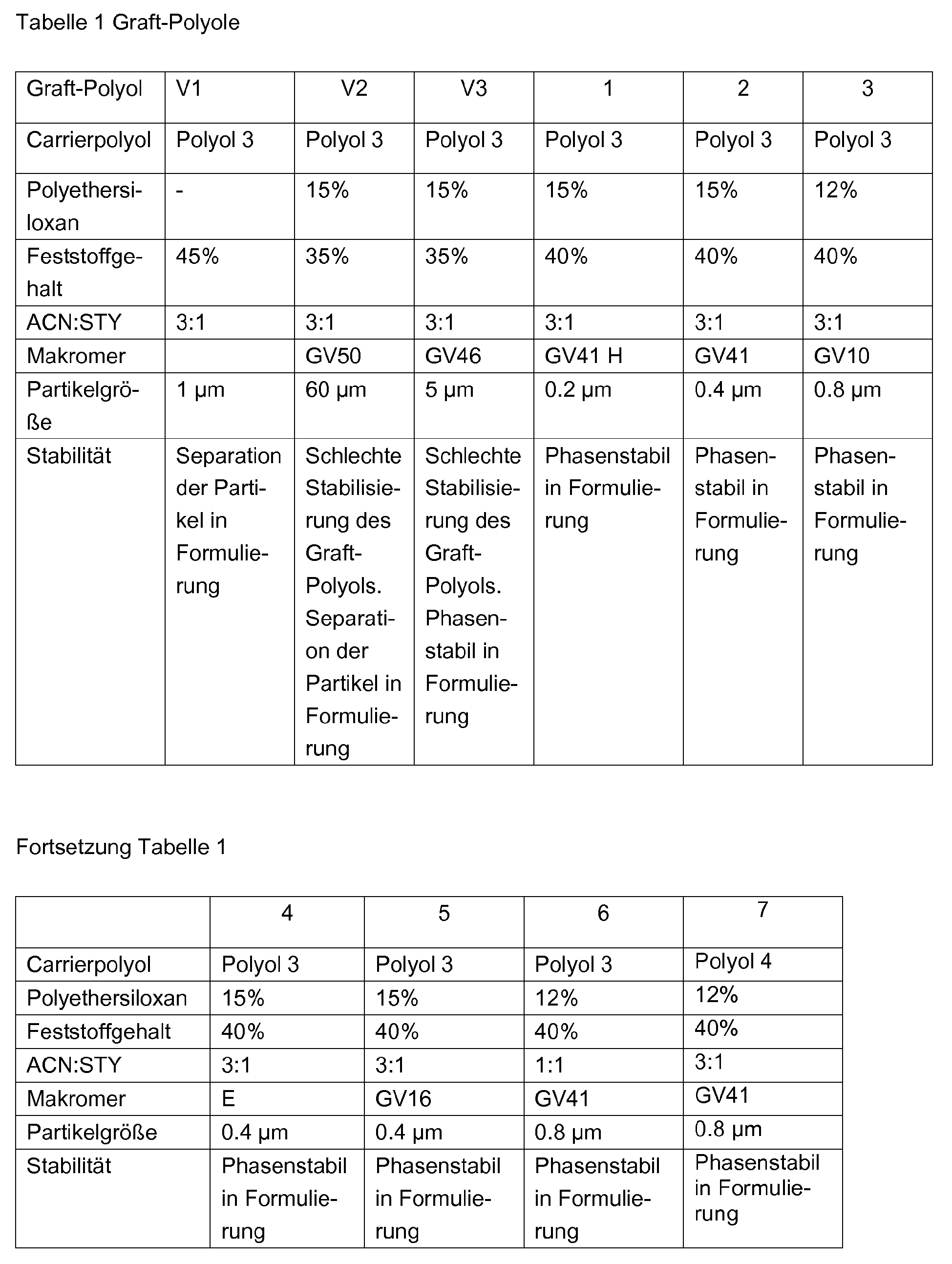

**Tabelle 2: Verwendete Makromere**

| Makromer | a | b | c | d | e | f | g | h |
|---|---|---|---|---|---|---|---|---|
| GV41 | 4400 | 3.6 | 1020 | 17 | 68:32 | 0.9 | 22000 | 0.20 |
| GV41 H | 2200 | 3.2 | 1020 | 8 | 68:32 | 0.9 | 10500 | 0.21 |
| E | 4000 | 2.4 | 900 | 25 | 60:40 | 0.9 | 26000 | 0.15 |
| GV 10 | 4400 | 6.0 | 900 | 8.6 | 69:31 | 0.9 | 12100 | 0.36 |
| GV16 | 3000 | 6.3 | 1700 | 5.1 | 60:40 | 0.9 | 11700 | 0.26 |
| | | | | | | | | |
| Vergleich | | | | | | | | |
| GV46 | 4050 | 9.5 | 970 | 4.6 | 60:40 | 0.9 | 8500 | 0,48 |
| GV50 | 5050 | 22.1 | 1870 | 2 | 68:32 | 0.9 | 8800 | 0.57 |

| | | | | | | | | |
|---|---|---|---|---|---|---|---|---|
| Nachfolgende Definitionen beziehen sich auf die allgemeine Formel (I) a - Molekulargewicht der Polysiloxankette b - Durchschnittliche Anzahl der Si-Atome zwischen den Verzweigungen c - Molekulargewicht einer Seitenkette d - Durchschnittliche Anzahl der Verzweigungen im Molekül e - Verhältnis von Ethylenoxid zu Propylenoxid in der Seitenkette f - durchschnittliche Anzahl der OH-Gruppen, die zu einer endständigen C=C-Bindung umgesetzt werden g - Gesamtmolekulargewicht des Makromers (Polyethersiloxankette) h - Verhältnis der hydrophoben Molekülbestandteile (Polysiloxankette) zum Gesamtmolekulargewicht (a/g) | | | | | | | | |

### Schaumstoffe

### Herstellung von Hartschaumstoffen (Maschinenverschäumung)

Die verschiedenen Polyole, Stabilisatoren, Katalysatoren werden mit Wasser und dem Treibmittel in den in Tabelle 1 angegebenen Verhältnissen gemischt. 100 Gewichtsteile der Polyolkomponente wurden mit der jeweiligen in Tabelle 1 genannten Menge einer Mischung aus Diphenylmethandiisocyanat und Polyphenylen-polymethylen-polyisocyanat mit einem NCO-Gehalt von 31,5 Gew.-% und einer Viskosität von 200 mPas (25° C) in einer Hochdruck-Verschäummaschine von Typ Pruromat® HD 30 (Elastogran GmbH) vermischt. Die Reaktionsmischung wurde in ein Formwerkzeug der Abmessungen 200 cm x 20 cm x 5 cm bzw. 40 cm x 70 cm x 9 cm eingespritzt und dort aufschäumen lassen. Die Eigenschaften und Kennzahlen der erhaltenen Schaumstoffe sind in Tabelle 1 angegeben.

Die nach dem erfindungsgemäßen Verfahren hergestellten Polyurethan-Hartschaumstoffe sind mit einer sehr kurzen Entformzeit auf Basis einer phasenstabilen Polyolkomponente herstellbar, was signifikant verkürzte Taktzeiten ermöglicht. In der Polyolkomponente sind trotz Anwesenheit der Graftpolyols große Mengen an physikalischen Treibmitteln löslich, so dass Schaumstoffdichten im Bauteil von unter 30g/l erreicht werden können. Die Schaumstoffeigenschaften in Bezug auf Druckfestigkeit, Wärmeleitfähigkeit und Qualität der Schaumstoffoberflächen (Bildung von Lunkern) sind exzellent.

Die Wärmeleitfähigkeit wird bestimmt nach DIN 52616. Zur Herstellung von Prüfkörper wird das Polyurethan-Reaktionsgemisch in eine Form der Maße 200 x 20 x 5 cm³ gegossen (10 % Überfüllung) und nach einigen Stunden ein Prüfkörper der Dimension 20 x 20 x 2 cm³ aus der Mitte herausgeschnitten.

Die Druckfestigkeit wird bestimmt nach DIN 53421 / DIN EN ISO 604.

Fliessfähigkeit ist eine dimensionslose Groesse und der Quotient aus Kernrohdichte zu frei geschäumter Rohdichte. Die Vernetzungsdichte berechnet sich aus den eingesetzten Rohstoffen nach der Formel auf S. 245 von T. Broennum "CFC-free polyurethane pipe insulation foams for use in district heating systems", PU World congress 1991, S243-249.

Tₘₐₓ wird bestimmt mit einem Temperatur-Messdraht, der während der Schaumreaktion in den Kern des Schaums gesteckt wird.

**Tabelle 3: Schaumeigenschaften:**

| | Vergleich 1 | Vergleich 2 | Beispiel 1 | Beispiel 2 | Beispiel 3 | Beispiel 4 | Beispiel 5 |
|---|---|---|---|---|---|---|---|
| Polyol 2 | 47.9 | 47.9 | 47.9 | 47.9 | 47.9 | 47.9 | 50 |
| Polyol 1 | 30 | 30 | 30 | 30 | 30 | 30 | 25 |
| Polyol 3 | 16 | | | | | | |
| Graftpolyol V1 | | 16 | | | | | |
| Graftpolyol 1 | | | 16 | | | | |
| Graftpolyol 7 | | | | 16 | | | |
| Graftpolyol 4 | | | | | 16 | | |
| Graftpolyol 5 | | | | | | 16 | |
| Graftpolyol 3 | | | | | | | 18 |
| Dipropylenglykol | | | | | | | 1 |
| Wasser | 2.7 | 2.7 | 2.7 | 2.7 | 2.7 | 2.7 | 2.7 |
| Stabilisator | 2 | 2 | 2 | 2 | 2 | 2 | 2 |
| Aminkatalysator | 2.1 | 2.1 | 2.1 | 2.1 | 2.1 | 2.1 | 2.1 |
| Cyclopentan 70 | 13 | 13 | 13 | 13 | 13 | 13 | 13 |
| Wärmeleitfähigkeit [mW/mK] | 19.7 | 19.6 | 19.8 | 20.0 | 19.6 | 19.9 | 19.7 |
| Entformdicke (3 min, 20% Overpack) [mm] | 95.5 | 93.9 | 93.7 | 94.4 | 94 | 94 | 94 |
| Fließfähigkeit | 1.31 | 1.34 | 1.34 | 1.32 | 1.31 | 1.32 | 1.33 |
| Druckfestigkeit (15% Overpack) [N/mm2] | 15.5 | 16.6 | 16.1 | 16.4 | 16.3 | 16.5 | 16.7 |
| Vernetzungsdichte | 2.57 | 2.53 | 2.35 | 2.35 | 2.35 | 2.35 | 2.35 |
| Tmax [° C] | 158 | 149 | 150 | 148 | 147 | 149 | 151 |
| Polyol Viskosität bei 20°C [mPas] | 6900 | 16000 | 10000 | 11000 | 11000 | 10000 | 10000 |
| Phasenstabilität bei 20°C [mPas] | ja | nein | ja | ja | ja | ja | ja |

Polyol 1 - Polyetheralkohol aus vicinalem TDA und Ethylenoxid und Propylenoxid mit einer Hydroxylzahl 390 mg KOH/g und einer Viskosität von 17000 mPas bei 25° C;
Polyol 2 - Polyetheralkohol aus Saccharose, Glyzerin und Propylenoxid mit einer Hydroxylzahl 440 mg KOH/g und einer Viskosität von 20000 mPas bei 25°C;
Polyol 3 - Polyetheralkohol aus vicinalem TDA und Ethylenoxid und Propylenoxid mit einer Hydroxylzahl 160 mg KOH/g und einer Viskosität von 800 mPas bei 25° C;
Polyol 4 ist ein Polyetheralkohol aus Glycerin und Propylenoxid mit einer Hydroxylzahl von 400 mg KOH/g und einer Viskosität von 350 mPas bei 25° C;
Stabilisator ist Tegostab B8462 (Silikonstabilisator);
Katalysator ist ein Gemisch aus N,N Dimethylcyclohexylamin, N,N,N',N",N"-Pentamethyldiethylenetriamine und Lupragen N600 im Verhältnis 53:26:21;
   - Vergleich 1:: Basissystem ohne Füllstoffe;
   - Vergleich 2:: bessere Entformbarkeit, aber zu viskos, keine Phasenstabiltät; Erfindungsgemäße Beispiele 1-5: bessere Entformbarkeit, akzeptable Viskosität und phasenstabil.

## Patentansprüche

1. Partikel enthaltende Polyetheralkohole, herstellbar durch in-situ Polymerisation von olefinisch ungesättigten Monomeren in einem Polyetheralkohol, **dadurch gekennzeichnet, dass** die Polymerisation in Anwesenheit von mindestens einer Verbindung (A) durchgeführt wird, die eine Polysiloxankette enthält, an der mindestens eine Polyetherkette, die mindestens ein reaktives Wasserstoffatom enthält, und eine Polyetherkette, die mindestens eine olefinische Doppelbindung enthält, gebunden sind.

2. Partikel enthaltende Polyetheralkohole nach Anspruch 1, **dadurch gekennzeichnet, dass** die Verbindungen (A) die allgemeine Formel (I) 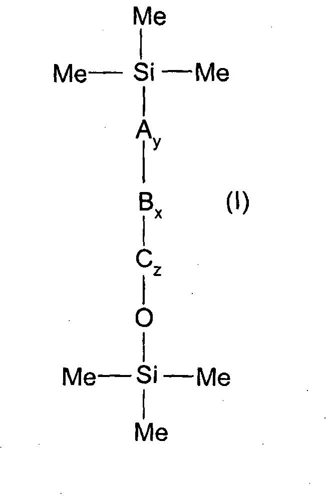 worin 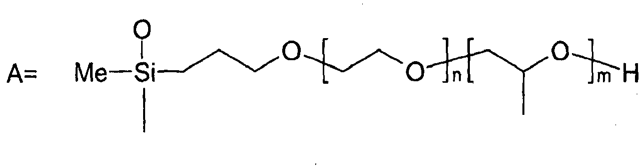 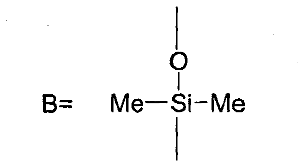 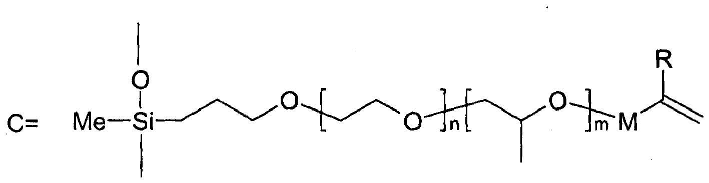 wobei A, B und C statistisch angeordnet sind und x, y und z so gewählt sind, dass das Gewichtsverhältnis von Polysiloxankette zu Gesamtmolekulargewicht 0,1 bis 0,4 beträgt,
Me eine Methylgruppe,
R eine Alkylgruppe mit 1 bis 10 Kohlenstoffatomen, M eine Alkylen- oder Arylengruppe oder araliphatische Gruppe mit 2 bis 10 Kohlenstoffatomen, die über eine Ether-, Ester-, Urethan-, Carbonat- oder Acetalbindung an die Polyetherkette angebunden sein kann,
m, n ganze Zahlen, die so gewählt sind, dass die Molekulargewichte Mₙ der Einheiten A und C im Bereich zwischen 500 und 2000 liegen und das Verhältnis n : m im Bereich von 25 : 75 bis 75: 25 liegt,
bedeuten,
wobei die Polysiloxankette 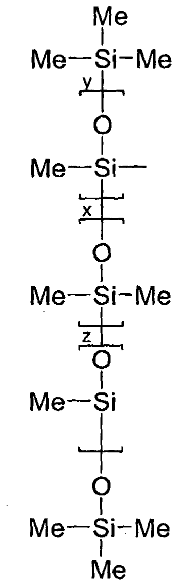 ein Molekulargewicht Mn zwischen 2000 und 4500 aufweist.

3. Partikel enthaltende Polyetheralkohole nach Anspruch 1 oder 2, **dadurch gekennzeichnet, dass** die Verbindungen (A) die allgemeine Formel (II) aufweisen, 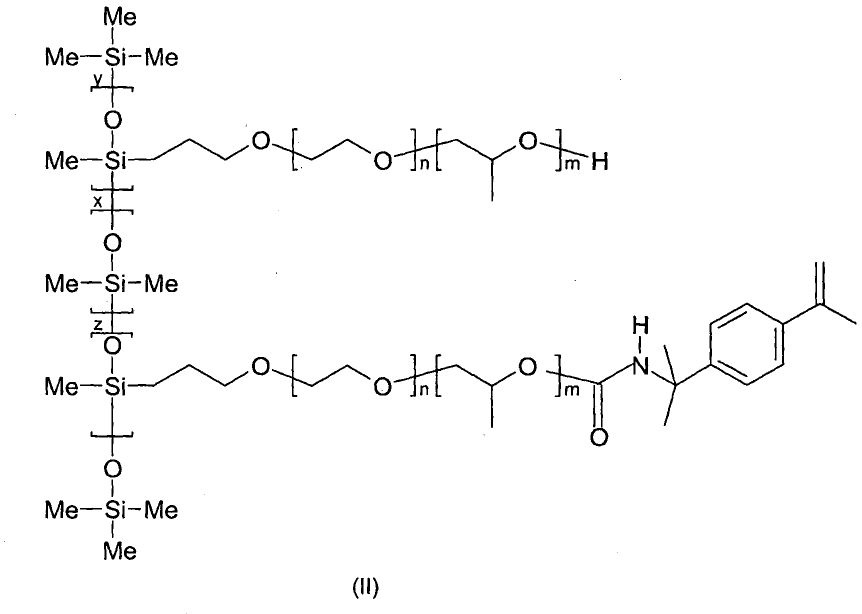 wobei die Variablen Me und m, n, x, y und z die gleiche Bedeutung haben wie in Formel (I).

4. Partikel enthaltende Polyetheralkohole nach Anspruch 2 oder 3, **dadurch gekennzeichnet, dass** die Verbindungen (A) 0,7 bis 1 Gruppen C im Molekül aufweisen.

5. Partikel enthaltende Polyetheralkohole nach einem der Ansprüche 1 bis 4, **dadurch gekennzeichnet, dass** die Verbindungen (A) ein Molekulargewicht Mn von 8000 bis 30000 aufweisen.

6. Partikel enthaltende Polyetheralkohole nach Anspruch 2 oder 3, **dadurch gekennzeichnet, dass** die Verbindungen (A) 8 bis 25 Einheiten A und/oder C im Molekül aufweist.

7. Partikel enthaltende Polyetheralkohole nach einem der Ansprüche bis 6, **dadurch gekennzeichnet, dass** zwischen je zwei Einheiten A und/oder C im Mittel 2 bis 8 Einheiten C liegen.

8. Partikel enthaltende Polyetheralkohole nach einem der Ansprüche 1 bis 7, **dadurch gekennzeichnet, dass** sie einen Gehalt an Partikeln von 35 Gew.-% bis 65 Gew.-%, bezogen auf das Gewicht des Partikel enthaltenden Polyetheralkohols, aufweisen.

9. Partikel enthaltende Polyetheralkohole nach einem der Ansprüche 1 bis 8, **dadurch gekennzeichnet, dass** sie eine Hydroxylzahl von 40-260 mg KOH/g aufweisen.

10. Partikel enthaltende Polyetheralkohole nach einem der Ansprüche 1 bis 9, **dadurch gekennzeichnet, dass** als olefinisch ungesättigte Monomere Styrol und/oder Acrylnitril eingesetzt werden.

11. Verfahren zur Herstellung von Partikel enthaltenden Polyetheralkoholen durch in-situ Polymerisation von olefinisch ungesättigten Monomeren in einem Polyetheralkohol, **dadurch gekennzeichnet, dass** die Polymerisation in Anwesenheit von mindestens einer Verbindung (A) durchgeführt wird, die eine Polysiloxankette enthält, an der mindestens eine Polyetherkette, die mindestens ein reaktives Wasserstoffatom enthält, und eine Polyetherkette, die mindestens eine olefinische Doppelbindung enthält, gebunden sind.

12. Verfahren zur Herstellung von Polyurethanen durch Umsetzung von
a) Polyisocyanaten mit
b) Verbindungen mit mindestens zwei mit Isocyanatgruppen reaktiven Wasserstoffatomen,
**dadurch gekennzeichnet, dass** die Komponente b) mindestens einen Partikel enthaltenden Polyetheralkohol b1) nach einem der Ansprüche 1 bis 10 enthält.

13. Verfahren nach Anspruch 12, **dadurch gekennzeichnet, dass** der Partikel enthaltende Polyetheralkohol b1) in einer Menge von 10 bis 30 Gew.-%, bezogen auf das Gewicht der Komponente b), enthalten ist.

14. Polyurethane, herstellbar nach dem Verfahren nach Anspruch 12 oder 13.

15. Verwendung von Partikel enthaltenden Polyetheralkoholen, wie in einem der Ansprüche 1 bis 10 definiert, zur Herstellung von Polyurethanen.

## Claims

1. A particle-comprising polyether alcohol which can be prepared by in-situ polymerization of olefinically unsaturated monomers in a polyether alcohol, wherein the polymerization is carried out in the presence of at least one compound (A) comprising a polysiloxane chain to which at least one polyether chain comprising at least one reactive hydrogen atom and a polyether chain comprising at least one olefinic double bond are bound.

2. The particle-comprising polyether alcohol according to claim 1, wherein the compounds (A) have the general formula (I) 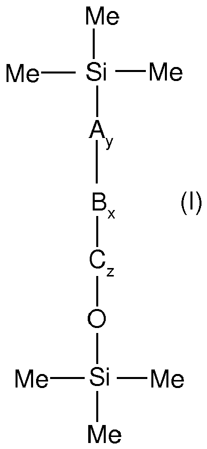 where 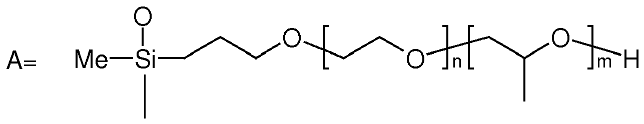 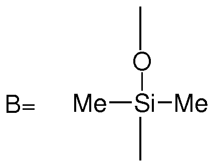 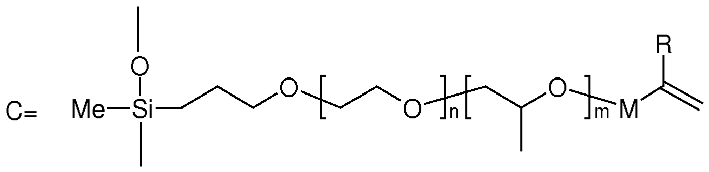 where A, B and C are arranged randomly and x, y and z are selected so that the weight ratio of polysiloxane chain to total molecular weight is from 0.1 to 0.4,
Me a methyl group,
R an alkyl group having from 1 to 10 carbon atoms,
M an alkylene or arylene group or araliphatic group having from 2 to 10 carbon atoms, which can be bound to the polyether chain via an ether, ester, urethane, carbonate or acetal bond,
m, n integers which are selected so that the molecular weights Mn of the units A and C are in the range from 500 to 2000 and the ratio n:m is in the range from 25:75 to 75:25,
where the polysiloxane chain 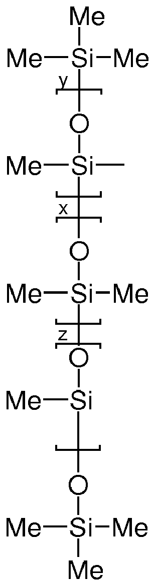 has a molecular weight Mn in the range from 2000 to 4500.

3. The particle-comprising polyether alcohol according to claim 1 or 2, wherein the compounds (A) have the general formula (II), 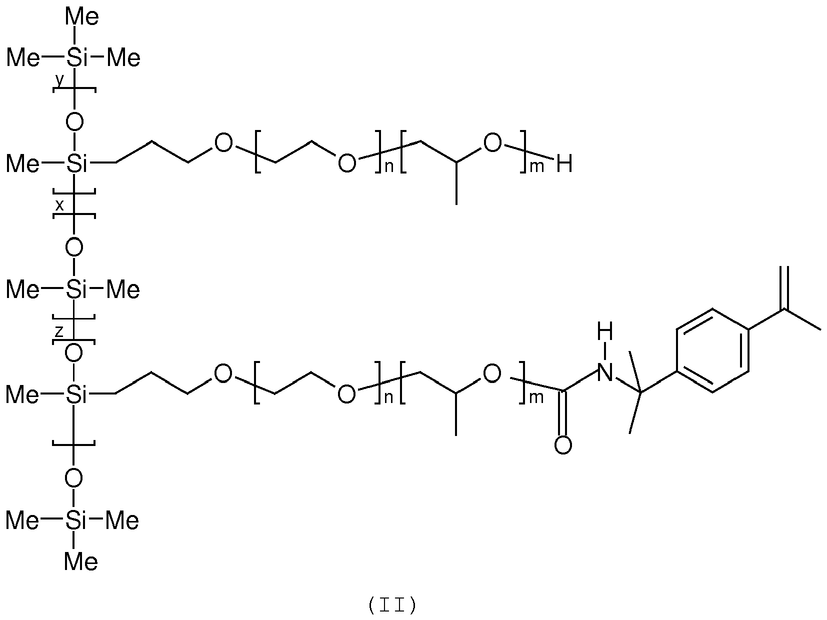 where the variables Me and m, n, x, y and z have the same meanings as in formula (I).

4. The particle-comprising polyether alcohol according to claim 2 or 3, wherein the compounds (A) have from 0.7 to 1 groups C in the molecule.

5. The particle-comprising polyether alcohol according to any of claims 1 to 4, wherein the compounds (A) have a molecular weight Mn of 8000 to 30 000.

6. The particle-comprising polyether alcohol according to claim 2 or 3, wherein the compounds (A) have from 8 to 25 units A and/or C in the molecule.

7. The particle-comprising polyether alcohol according to any of claims 2 to 6, wherein between each two units A and/or C there are on average from 2 to 8 units C.

8. The particle-comprising polyether alcohol according to any of claims 1 to 7 having a content of particles of from 35% by weight to 65% by weight, based on the weight of the particle-comprising polyether alcohol.

9. The particle-comprising polyether alcohol according to any of claims 1 to 8 having a hydroxyl number of 40-260 mg KOH/g.

10. The particle-comprising polyether alcohol according to any of claims 1 to 9, wherein styrene and/or acrylonitrile are used as olefinically unsaturated monomers.

11. A process for preparing the particle-comprising polyether alcohols by in-situ polymerization of olefinically unsaturated monomers in a polyether alcohol, wherein the polymerization is carried out in the presence of at least one compound (A) comprising a polysiloxane chain to which at least one polyether chain comprising at least one reactive hydrogen atom and a polyether chain comprising at least one olefinic double bond are bound.

12. A process for producing polyurethanes by reacting
a) polyisocyanates with
b) compounds having at least two hydrogen atoms which are reactive toward isocyanate groups, wherein the component b) comprises at least one particle-comprising polyether alcohol according to any of claims 1 to 10.

13. The process according to claim 12, wherein the particle-comprising polyether alcohol b1) is present in an amount of from 10 to 30% by weight, based on the weight of the component b).

14. A polyurethane which can be obtained by the process according to claim 12 or 13.

15. The use of particle-comprising polyether alcohols as defined in any of claims 1 to 10 for producing polyurethanes.

## Revendications

1. Polyétheralcools contenant des particules, pouvant être préparés par polymérisation in situ de monomères à insaturation oléfinique en un polyétheralcool, **caractérisé en ce que** la polymérisation est effectuée en présence d'au moins un composé (A) qui contient une chaîne polysiloxane à laquelle sont liées au moins une chaîne polyéther qui contient au moins un atome d'hydrogène réactif, et une chaîne polyéther qui comporte au moins une double liaison oléfinique.

2. Polyétheralcools contenant des particules selon la revendication 1, **caractérisés en ce que** les composés (A) présentent la formule générale (I) 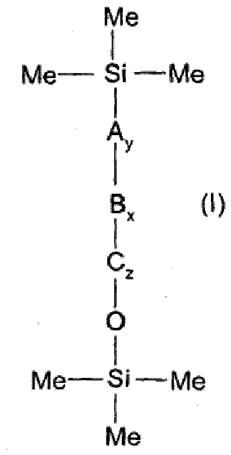 dans laquelle 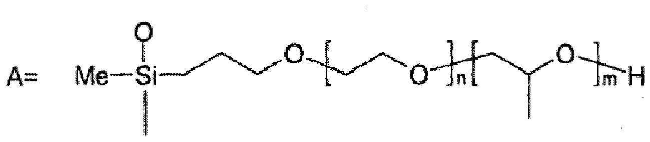 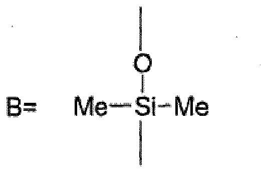 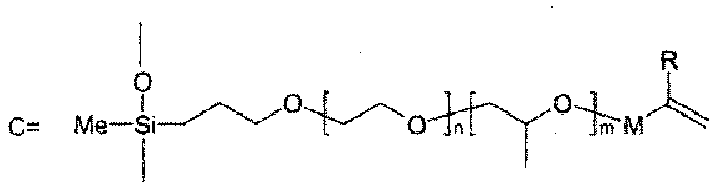 A, B et C étant en disposition statistique et x, y et z étant choisis de manière que le rapport pondéral de la chaîne polysiloxane à la masse moléculaire totale vaille de 0,1 à 0,4.
Me représente un groupe méthyle,
R représente un groupe alkyle ayant de 1 à 10 atomes de carbone,
M représente un groupe alkylène ou arylène ou un groupe araliphatique ayant de 2 à 10 atomes de carbone, qui peut être lié à la chaîne polyéther par une liaison éther, ester, uréthane, carbonate ou acétate,
m, n représentent des nombres entiers qui sont choisis de manière que les masses moléculaires Mₙ des motifs A et C se situent dans la plage comprise entre 500 et 2 000 et le rapport n : m se situe dans la plage de 25 : 75 à 75 : 25,
la chaîne polysiloxane 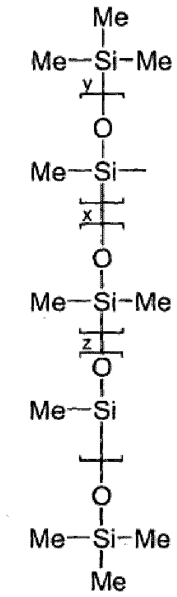 présentant une masse moléculaire Mn comprise entre 2 000 et 4 500.

3. Polyétheralcools contenant des particules selon la revendication 1 ou 2, **caractérisés en ce que** les composés (A) présentent la formule générale (II) 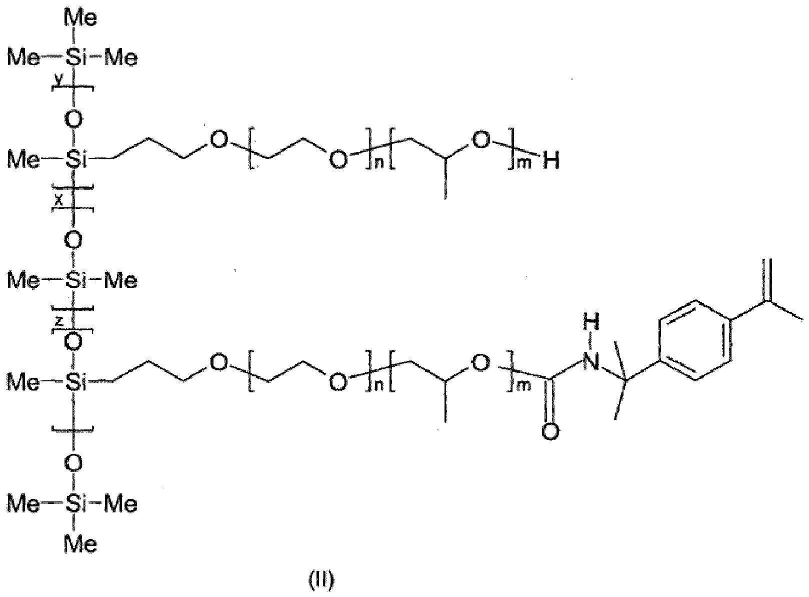 les variables Me et m, n, x, y et z ayant les mêmes significations que dans la formule (I).

4. Polyétheralcools contenant des particules selon la revendication 2 ou 3, **caractérisés en ce que** les composés (A) comportent 0,7 à 1 groupe C dans la molécule.

5. Polyétheralcools contenant des particules selon l'une quelconque des revendications 1 à 4, **caractérisés en ce que** les composés (A) présentent une masse moléculaire Mn de 8 000 à 30 000.

6. Polyétheralcools contenant des particules selon la revendication 2 ou 3, **caractérisés en ce que** les composés (A) comportent 8 à 25 motifs A et/ou C dans la molécule.

7. Polyétheralcools contenant des particules selon l'une quelconque des revendications 2 à 6, **caractérisés en ce qu'**en moyenne 2 à 8 motifs C se trouvent entre chaque fois deux motifs A et/ou C.

8. Polyétheralcools contenant des particules selon l'une quelconque des revendications 1 à 7, **caractérisés en ce qu'**ils présentent une teneur en particules de 35 % en poids à 65 % en poids, par rapport au poids des polyétheralcools contenant des particules.

9. Polyétheralcools contenant des particules selon l'une quelconque des revendications 1 à 8, **caractérisés en ce qu'**ils présentent un indice de groupes hydroxy de 40-260 mg de KOH/g.

10. Polyétheralcools contenant des particules selon l'une quelconque des revendications 1 à 9, **caractérisés en ce qu'**on utilise comme monomères à insaturation oléfinique le styrène et/ou l'acrylonitrile.

11. Procédé pour la préparation de polyétheralcools contenant des particules par polymérisation in situ de monomères à insaturation oléfinique en un polyétheralcool, **caractérisé en ce qu'**on effectue la polymérisation en présence d'au moins un composé (A) qui contient une chaîne polysiloxane, à laquelle sont liées au moins une chaîne polyéther qui contient au moins un atome d'hydrogène réactif, et une chaîne polyéther qui comporte au moins une double liaison oléfinique.

12. Procédé pour la préparation de polyuréthanes par mise en réaction de
a) polyisocyanates avec
b) des composés comportant au moins deux atomes d'hydrogène réactifs avec des groupes isocyanate,
**caractérisé en ce que** le composant b) contient au moins un polyétheralcool b1), contenant des particules, selon l'une quelconque des revendications 1 à 10.

13. Procédé selon la revendication 12, **caractérisé en ce que** le polyétheralcool b1) contenant des particules est contenu en une quantité de 10 à 30 % en poids par rapport au poids du composant b).

14. Polyuréthanes, pouvant être préparés conformément au procédé selon la revendication 12 ou 13.

15. Utilisation de polyétheralcools contenant des particules, tels que définis dans l'une quelconque des revendications 1 à 10, pour la préparation de polyuréthanes.
